# EUROPEAN PATENT SPECIFICATION

(11) **EP 1 728 764 B1**
(45) Date of publication and mention of the grant of the patent: **12.06.2013**
(21) Application number: 06008068.6
(22) Date of filing: 19.04.2006
(51) Int. Cl.: C01G 21/06, C01G 21/12, C01G 21/14

(54) **Process for the production of lead hydrate or monoxide of high purity from materials and/or residues containing lead in the form of sulphates, monoxides and/or other compounds**
Verfahren zur Herstellung von Bleihydrat oder -monoxid mit hoher Reinheit aus Materialien und/oder Abfallstoffen die Blei in Form von Sulfaten, Monoxiden und/oder anderen Verbindungen enthalten.
Procédé de préparation d'hydrate ou de monoxyde de plombs de grande pureté en partant de matériaux ou/et de résidus comprenant des composés deplombs en formes de sulfates, monoxides et/ou d'autres formes.

(30) Priority: 19.04.2005 IT BR20050002
(43) Date of publication of application: 06.12.2006
(73) Proprietor: STC S.r.l. Science Technology & Consulting, 87064 Corigliano Calabro CS (IT)
(72) Inventor: Guerriero, Renato, 30123 Venezia (IT); La Sala, Giorgio, 87084 Corigliano Calabro (CS) (IT)

(56) References cited:
- US-A- 3 194 633
- US-A- 4 220 628
- US-A- 4 269 811
- US-A- 4 336 236

## Description

The present invention claims a process for the production of lead hydrate or monoxide of high purity, from materials and/or residues containing lead in the form of sulphates, monoxides and/or other compounds, such as the paste coming from the recycling of exhaust acid batteries.

In current industrial practice the paste coming from the recycling of exhaust acid batteries, (mainly consisting of lead sulphate and generally smaller quantities of lead dioxide, lead alloys and other lead complexes) is used as the secondary raw material in primary lead smelters. In some cases, after a process of desulphurisation consisting in treatment of the paste in an aqueous suspension with an alkaline carbonate that converts the lead sulphate into a carbonate, it is used as a raw material in small reducing furnaces for the production of secondary lead.

Various patents concerning this matter have been published in the known art.

One of these (1978-Striffler, Kolakowski; US-4220628) describes a desulphurisation treatment by carbonation with ammonium carbonate.

A few patents foresee a desulphurisation treatment of the paste with an alkaline hydrate and the resulting desulphurised product is used as a raw material in electrolytic processes for the production of lead in both an aqueous solution (1988-Olper; US-4769116) and smelted salts (1998-Margulis; US-5827347).

Other patents describe processes that contemplate treatment of the carbonated paste for the production of pure lead monoxide by solubilization of lead in hot concentrated solutions of alkaline hydrate and subsequent precipitation of the monoxide with the addition of substances that affect its solubility (1998-Margulis; US-5840262) or by changing the pH by adding acids (1961-Voss, Koenig; US-3194633). A different process consists in a solubilization of lead in ammonium acetate solutions and subsequent precipitation by varying the pH with the addition of ammonia (1978-Strffler, Kolakowski; US-4220628). Another patent describes a process of paste lead sulphate solubilization directly with an ammonia sulphate solution, where the lead is made to precipitate with ammonium carbonate or bicarbonate and the resulting lead carbonate is then converted into lead monoxide via calcination (1978-Elmore, Klang; US-4118219).

Another patent (US-4336236) discloses a process which comprises a desulphurisation step by reacting battery mud with an ammonium carbonate solution, followed by a solid/liquid separation step, followed with a calcining the obtained solid in order to obtain impure lead monoxide, which is than leached with acetic acid, the lead gangue is separated and than the solution is carbonated, followed by a second carbonation and the calcinations of the finally obtained, highly pure lead carbonate, which is than calcinated to obtain a lead monoxide.

In all the above cases, the processes pose several application problems, due to the strong caustic solutions at high temperatures or to complications in recycling and recovering the leaching solutions or the low conversion rates or the high running costs due to the impossibility to get economies of scale in the treatments of the relatively small quantitites of residues.

Then again the chemical literature includes descriptions of lab processes for the production of pure lead hydrate and monoxide from solutions of soluble lead salts, such as lead nitrate, lead acetate and lead perchlorate, using soda as the precipitant.

A new, surprisingly easy and low-cost process has now been discovered, letting one get lead hydrate or monoxide with high levels of purity, even more than 99.9%, from materials containing lead sulphate, such as the paste coming from the recycling of acid batteries in particular.

This process can also be self-sustaining when designed to allow for complete recycling of the reactants, meaning that no waste is generated. The process with complete recycling of the reactants deals with most of the environmental and pollution issues generally connected to the processes for recovery of lead from battery paste, unlike the known processes.

The process, claimed in the present application, for the production of lead hydrate or monoxide of high purity, from materials and/or residues containing lead in the form of sulphates, monoxides and/or other compounds, such as the paste coming from exhaust acid batteries, is characterized in that it comprises the following steps:
- desulphurisation of the material and/or residue containing lead sulphate in an aqueous suspension with a suitable carbonate or hydrate in order to get conversion of the lead sulphate into a carbonate or hydrate;
- calcination of this desulphurised material and/or residue in order to get impure lead monoxide, followed by cooling and grinding;
- leaching of the impure lead monoxide by an aqueous solution of acetic acid followed by filtering to separate a solid residue, consisting mainly of non converted lead sulphate, from a lead acetate solution;
- precipitation of the lead acetate in solution by means of an alkaline hydroxide or alkaline-earth hydroxide, able to obtain soluble acetates, used in such a quantity that the pH value reaches about 13, in order to get a precipitate, , in the form of either lead hydrate or lead monoxide, where precipitation is carried out at temperatures below 50 °C, to get a hydrate precipitate, or at boiling temperature, to get a monoxide precipitate followed by filtering of the obtained precipitate, separating a solution, at least one washing cycle and subsequent separation of the washing liquid;
- drying and optional calcination of the filtered and washed precipitate to get high purity lead hydrate or monoxide depending on the drying temperature.

The desulphurisation step of the material and/or residue containing lead sulphate is preferably carried out in an aqueous solution with a suitable carbonate or hydrate selected from those of sodium, potassium or ammonium, followed by filtering to separate a relevant solution of sodium, potassium or ammonium sulphate, by at least one washing cycle of said filtered desulphurised material and/or residue and by subsequent separation of the washing liquid.

The calcination of the material and/or desulphurised residue is preferably carried out from 1/2 an hour to 2 hours at a temperature of more than 550°C, more preferably between 600-700°C.

The leaching is carried out with an aqueous solution of acetic acid, preferably with a slight stoichiometric excess compared to the present lead: the leaching temperature is not binding, though it is preferable that the operation takes place at room temperature, between 30-50°C, though higher temperatures are not excluded.

The solid residue separated via filtering, which mainly consists of non converted lead sulphate during desulphurisation and various impurities present in the paste, such as, e.g., basic lead or antimony sulphates, iron compounds and silica, can be recycled at the desulphurisation step or used as a secondary raw material in primary lead production furnaces.

The lead precipitation is via the addition of an alkaline or alkaline-earth hydroxide, which may generate soluble acetates, preferably selected from sodium hydroxide (caustic soda), potassium hydroxide (caustic potash), ammonium hydroxide or calcium hydroxide (hydrated lime).

E.g. the alpha (red) form is obtained in the presence of a strong excess of caustic soda or potash, or the beta (yellow) form in the presence of a slight excess of caustic soda or potash.

Optionally before the precipitation of the lead acetate solution a purification can be carried out by electrochemical shift (cementation), for instance with lead metal powder to separate and optionally to recover the nobler impurities in the lead.

The drying process can be done at temperatures below 100°C to get high purity lead hydrate, at temperatures between 130 and 150°C to get high purity lead monoxide in a virtually amorphous state or even at temperatures above 150°C and till 650°C to get high purity, well crystallised lead monoxide in the alpha or beta form.

To eliminate all traces of the sodium and acetate and to get an even purer form of lead monoxide, where the operating specifications for the monoxide require this), two further stages can be foreseen, prior to drying step:
- the use of further washing cycles;
- and/or the subjecting the filtered and washed precipitate to a re-dissolving of the lead hydrate or monoxide with subsequent re-precipitation of the same, followed by at least one washing cycle and subsequent separation of the washing liquid.

The washing liquid, separated from the filtered and washed precipitate, can be used to prepare the hydroxide solution used during the precipitation step.

The solution separated during the filtration of the precipitate can also preferably be treated by bubbling carbon dioxide in order to cause the precipitation of any remaining lead still in solution in form of carbonate, followed by filtering of the carbonate precipitate, to separate the traces of the lead as carbonate from a clear solution containing acetate of sodium, or potassium, or ammonium, or calcium if lime is used to precipitate lead.

The clear filtered solution is preferably treated with cationic acid exchanging resins to capture the cations of the precipitating, of sodium or potassium or ammonium, and regenerate the acetic acid, which is recycled in the leaching step.

The exchanging resins can be preferably regenerated with sulphuric acid to get sodium, potassium or ammonium sulphate solutions, which are sent to the said sulphate recycling cycle.

It is evidently advisable to use sodium, potassium or ammonium as the carbonate used during desulphurisation and as the hydroxide used during precipitation so that the corresponding sulphate solutions can both be sent to a said sulphate single recycling cycle.

In alternative to resin treatment, the solution separated during the filtering of the precipitate can be acidified with sulphuric acid, optionally that recovered from the batteries themselves, to obtain a precipitation of lead sulphate, and the acetic acid recovered by solvent extraction followed by a separation by distillation of solvent and recycled to the leaching step.

Water is the preferred washing liquid for all the washing cycles mentioned in the claimed process above described.

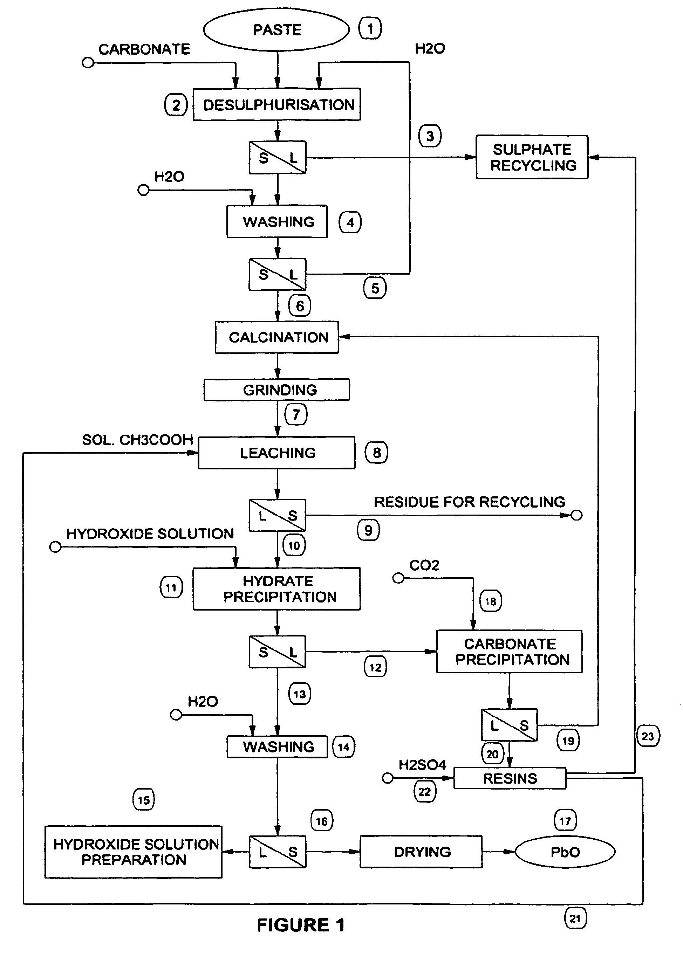

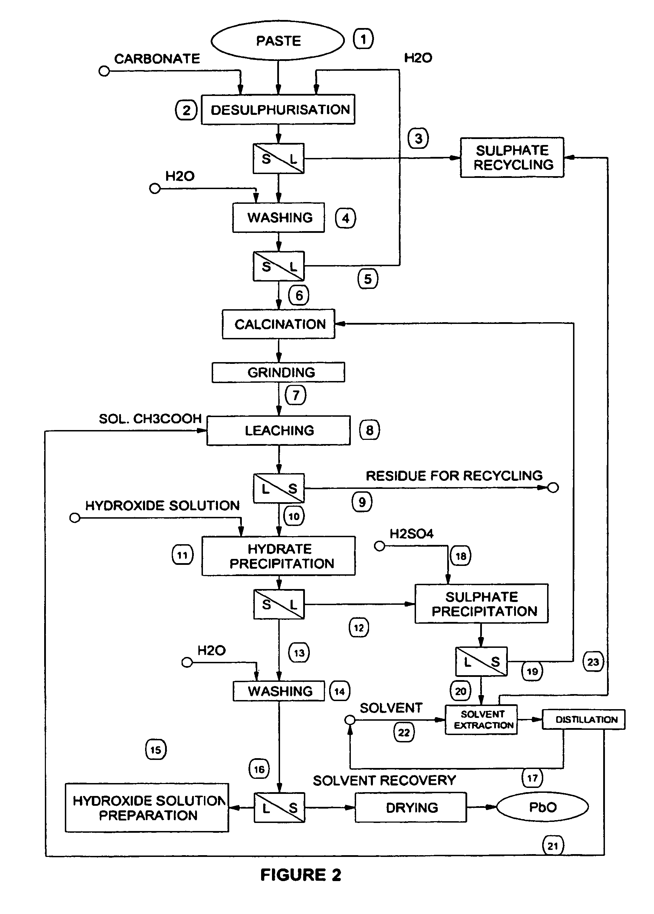

Now two realizations of the present invention are furnished by the enclosed figures 1 and 2, that provide the flow-charts showing each stage in the process and the various integration, which cannot be considered as limiting the scope of the invention itself.

In the first realization in fig. 1 the paste (1) coming from the recycling of the exhaust acid batteries receives desulphurisation treatment via a suitable carbonate (2) and is then separated in order to remove the sulphates solution (3), followed by washing with water (4) and, finally, separation of the washing liquid (5).

The desulphurised paste (6) undergoes a calcination, then, after cooling, is sent to a fine grinding.

The grinded product (7) undergoes leaching with an aqueous acetic acid solution (8) followed by filtering to separate the solid residue (9), mainly consisting of non carbonate lead sulphate and various impurities in the paste, from the filtered solution (10).

The solid residue (9) may be recycled to desulphurisation step or used as a secondary raw material in primary lead production furnaces.

The filtered solution is sent to a precipitation where the lead is precipitated in the form of a hydrate or monoxide by the use of a sodium, potassium or ammonium hydroxide solution (11). The precipitate is quickly filtered, separating a solution (12), then the filtered solid (13) subjected to at least one washing cycle using water (14) followed by the separation of the washing liquid (15), which will be then used for the preparation of the hydroxide solution (11), from the filtered and washed solid (16) which is sent for drying to get, depending on the selected temperature, a monoxide (17) in a nearly amorphous state or the formation of a well crystallised lead monoxide in alpha or beta form, both with high purity.

The solution (12) coming from the filtering of the hydrate is is treated by bubbling carbon dioxide (18) to precipitate as carbonate the small quantities of lead remained in solution , followed by filtering to separate the lead carbonate (19), which is recycled to the calcination step, from the clear filtered solution (20), which is treated with strong acid cationic exchanging resins to regenerate the acetic acid (21), which is recycled to the leaching step. The resins are regenerated with sulphuric acid (22) and the sulphate obtained solutions (of sodium, potassium or ammonium) (23) are recovered, with the solution (3) coming from the filtration of the desulphurised paste, to the sulphate recycling cycle.

In order to keep a balance in volume, the solution (21) may be concentrated, e.g. via reverse osmosis or heat evaporation.

In the second realization in fig. 2 the difference compared to fig.1 is the following: the acetic acid recovery is made by solvent extraction process instead an ion exchange resin process. The solvent extraction process is followed by a distillation to separate the acetic acid from the solvent and both are recycled, the acid in the leaching process and the solvent in the solvent extraction process.

Some examples are provided according to the invention for a better illustration of the present invention, carried out as shown in the flowchart of the enclosed figure 1, apart from examples 3 and 4 which also foresee re-dissolving of the lead hydrate.

### Example 1

Desulphurisation operation by means of carbonation of the paste was carried out in an aqueous suspension at 80°C with sodium carbonate. After 1 hour the conversion rate is more than 90%. The carbonated paste is washed to remove completely sodium sulphate and is then calcinated at 650°C for about 1 hour.

1000 g of this calcinated product are leached with 9 litres of an aqueous solution of acetic acid (60-70 g/l) at 50°C for about 1 hour. The residue, which mainly consists of lead sulphate and contains the majority of the impurities such as silica, silicates and aluminosilicates, calcium sulphate, ferrous hydroxides, complex lead/antimony salts, barium sulphate, stannous oxides, etc., is then separated by filtration. The leaching yield under such conditions is about 90% as to lead.

The clear filtered solution is then alkalinised by slowly adding a solution of about 9N sodium hydrate, stirring continuously, and keeping temperature below 50°C. Once all the lead has precipitated (pH about 13), the turbid solution is quickly filtered. The resulting hydrate is washed 3 times with 1.5 1 water each time. The washed hydrate is dried at 140°C for 4 hours.

In this way 670 g lead monoxide was obtained with a titre of more than 99.0%, which, calcined at 650°C, reached a max value more than 99.9%.

### Example 2

1000 g limed material, obtained as explained in example 1 above, was leached with 4.5 1 acetic acid solution (c. 130 g/l) at 50°C for 1 hour. Following the same steps as above, 675 g of lead monoxide with a titre of 99.0% was obtained, which after calcination at 650°C reached a value more than 99.9%.

### Example 3

Lead hydroxide, obtained as in example 1 above, was re-dissolved with an excess of sodium hydrate and then re-precipitated to return the pH of the solution to about 13 using acid. The resulting hydrate was washed and dried as in example 1. The titre of the resulting monoxide exceeds 99.99%.

### Example 4

Lead hydrate obtained as in example 1 above was re-dissolved using the minimum quantity of hydrochloric acid and then made to re-precipitate at pH 13.

Washed and dried as in example 1, the resulting lead monoxide had a titre of more than 99.99%.

### Example 5

The solution, coming from the filtration of the precipitated lead hydrate as in example 1, containing about 4.5 g of lead per litre, was treated with carbon dioxide by bubbling. The lead precipitates in this way quantitatively as carbonate and is separated by filtering.

### Example 6

The lead-extracted solution, obtained as in example 5 above, was treated with strong acid cationic exchanging resins. In this way initial free acetic acid solution is restored which can be recycled, after suitable concentration, to the leaching step.

## Claims

1. Process for the production of lead hydroxide or monoxide of high purity, from materials and/or residues containing lead in the form of sulphates, monoxides and/or other compounds, such as the paste coming from exhaust acid batteries,
**characterized in that** it comprises the following steps:
• desulphurisation of the material and/or residue containing lead sulphate in an aqueous suspension with a suitable carbonate or hydrate in order to get conversion of the lead sulphate into a carbonate or hydrate;
• calcination of this desulphurised material and/or residue in order to get impure lead monoxide, followed by cooling and grinding;
• leaching of the impure lead monoxide by an aqueous solution of acetic acid followed by filtering to separate a solid residue, consisting mainly of non converted lead sulphate, from a lead acetate solution;
• precipitation of the lead acetate in solution by means of an alkaline hydroxide or alkaline-earth hydroxide, able to obtain soluble acetates, used in such a quantity that the pH value reaches about 13, in order to get a precipitate, in the form of either lead hydrate or lead monoxide where precipitation takes place either at temperatures below 50 °C, to get a precipitate in form of hydrate, or at boiling temperature, to get a precipitate in form of monoxide, followed by filtering of the obtained precipitate, separating a solution, at least one washing cycle and subsequent separation of the washing liquid;
• drying and optional calcination of the filtered and washed precipitate to get high purity lead hydrate or monoxide depending on the drying temperature.

2. Process according to claim 1 where the step of desulphurisation of the material containing lead sulphate is carried out in an aqueous solution with a carbonate or hydrate selected from those of sodium, potassium or ammonium, followed by filtering to separate a relevant solution of sodium, potassium or ammonium sulphate, by at least one washing cycle of said filtered desulphurised material and/or residue and by subsequent separation of the washing liquid.

3. Process according to claim 1 where the hydroxide used for precipitation is selected from sodium hydroxide, potassium hydroxide and ammonium hydroxide.

4. Process according to claim 1 where drying takes place at temperatures below 100°C to get high purity lead hydrate or at temperatures between 130 and 150°C to get high purity lead monoxide or at temperatures above 150°C and till 650°C to get high purity crystallised lead monoxide in the alpha or beta form.

5. Process according to claim 1 where the solution separated during the filtering of the precipitate is treated by bubbling carbon dioxide in order to cause the precipitation of any remaining lead still in solution in form of carbonate, followed by filtering of the carbonate precipitate, to separate the traces of the lead as carbonate from a clear solution containing acetate of sodium, or potassium, or ammonium, or calcium if lime is used to precipitate lead.

6. Process according to claim 5 where the clear filtered solution is treated with strong cationic acid exchanging resins to catch the cation of the precipitating, of sodium, potassium or ammonium, and regenerate the acetic acid which is recycled in the leaching step.

7. Process according to claim 1 where the solution separated during the filtering of the precipitate is acidified with sulphuric acid, to obtain a precipitation of lead sulphate, and the acetic acid in solution recovered by extraction with a solvent and/or distillation and then recycled to the leaching step.

8. Process according to claim 6 where the exchanging resins are regenerated with sulphuric acid to get a sodium, potassium or ammonium sulphate solution, which are sent to the sulphate recycling cycle.

9. Process according to claim 2, 3 e 8 where both the carbonate or hydroxide used during desulphurisation and the hydroxide used during precipitation are of sodium, potassium or ammonium whose sulphate solutions are both sent to the sulphate recycling cycle.

10. Process according to claim 1 where before the drying step the filtered and washed precipitate is subjected to a re-dissolving of the lead hydrate or monoxide with subsequent re-precipitation of the same, followed by at least one washing cycle and subsequent separation of the washing liquid.

## Patentansprüche

1. Verfahren zur Herstellung von Bleihydrat oder -monoxid mit hoher Reinheit aus Materialien und/oder Abfallstoffen, die Blei in Form von Sulfaten, Monoxiden und/oder anderen Verbindungen wie Bleipaste aus leeren Säurebatterien enthalten, durch die folgenden Schritte gekennzeichnet:
• Entschwefelung des Materials und/oder der Abfallstoffe, die Bleisulfat in wässriger Lösung enthalten mit geeignetem Karbonat oder Hydrat, um das Bleisulfat in ein Karbonat oder Hydrat umzuwandeln;
• Kalzinierung dieses entschwefelten Materials und/oder Abfallstoffes, um unreines Bleimonoxid zu erhalten, gefolgt von Kühlung und Zerkleinerung;
• Bleichen des unreinen Bleimonoxid durch eine wässrige Essigsäurelösung gefolgt von Filterung, um einen festen Rückstand, der hauptsächlich aus nicht umgewandeltem Bleisulfat besteht, von einer Bleisäurelösung zu trennen;
• Fällung der Bleisäurelösung durch ein alkalisches oder erdalkalisches Hydroxid, das in der Lage ist lösliche Säuren zu bilden, in einer Quantität angewandt, dass der PH-Wert ungefähr 13 erreicht, um ein Präzipitat zu erhalten, in der Form von Bleihydrat oder Bleimonoxid, wobei die Fällung entweder bei Temperaturen unter 50°C stattfindet, um ein Präzipitat in Form von Hydrat zu erhalten, oder bei Siedetemperatur, um ein Präzipitat in Form von Monoxid zu erhalten, gefolgt von Filterung des erhaltenen Präzipitats, Trennung einer Lösung, wenigstens einem Waschzyklusses und nachfolgender Trennung der Waschflüssigkeit;
• Trocknen und optionale Kalzinierung des gefilterten und gewaschenen Präzipitats, um, abhängig von der Trocknungstemperatur, hochreines Bleihydrat oder Monoxid zu erhalten.

2. Verfahren nach Anspruch 1, **dadurch gekennzeichnet, dass** die Entschwefelung des bleisulfathaltigen Materials in einer wässrigen Lösung ausgeführt wird, mit einem Karbonat oder Hydrat, gewählt aus Natrium, Kalium oder Ammonium, gefolgt von Filterung, um eine relevante Natrium-, Kalium- oder Ammoniumsulfatlösung zu trennen, durch wenigstens einen Waschzyklus des besagten gefilterten entschwefelten Materials und/oder Abfallstoff und durch nachfolgende Trennung der Waschflüssigkeit.

3. Verfahren nach Anspruch 1, **dadurch gekennzeichnet, dass** das für die Fällung benutzte Hydroxid aus Natriumhydroxid, Kaliumhydroxid und Ammoniumhydroxid gewählt wird.

4. Verfahren nach Anspruch 1, **dadurch gekennzeichnet, dass** die Trocknung bei Temperaturen unter 100°C stattfindet, um hochreines Bleihydrat zu erhalten, oder bei Temperaturen zwischen 130 und 150°C, um hochreines Bleimonoxid zu erhalten oder bei Temperaturen über 150°C und bis 650°C, um hochreines kristallisiertes Bleimonoxid in Alpha- oder Betaform zu erhalten.

5. Verfahren nach Anspruch 1, **dadurch gekennzeichnet, dass** die während der Filterung des Präzipitats getrennte Lösung mit sprudelndem Kohlenstoffdioxid behandelt wird, um die Präzipitation vom in der Lösung in Form von Karbonat präsenten Blei zu verursachen, gefolgt von Filterung des präzipitierten Karbonats, um Spuren von Blei wie Karbonat von einer klaren Lösung zu trennen, die Natriumsäure, oder Kaliumsäure oder Ammoniumsäure enthält oder Calciumacetat, wenn Baukalk benutzt wird, um Blei zu fällen.

6. Verfahren nach Anspruch 5, **dadurch gekennzeichnet, dass** die klar gefilterte Lösung mit stark sauren Kationenaustauschharzen behandelt wird, um die Kationen des Präzipitats, des Natriums, Kaliums oder Ammoniums zu fangen, und um die Essigsäure zu regenerieren, die in der Bleichung recycelt wird.

7. Verfahren nach Anspruch 1, **dadurch gekennzeichnet, dass** die während der Filterung des Präzipitats getrennte Lösung mit Schwefelsäure gesäuert wird, um die Fällung des Bleisulfats und Essigsäure in Lösung zu erhalten, die durch Extraktion mit einem Solvent und/oder Destillation wiedergewonnen und dann in der Bleichung recycelt wird.

8. Verfahren nach Anspruch 6, **dadurch gekennzeichnet, dass** die austauschenden Harze mit Schwefelsäure regeneriert werden, um eine Natrium-, Kalium- oder Ammoniumsulfatlösung zu erhalten, die in den Sulfatrecyclingkreislauf geleitet wird.

9. Verfahren nach Anspruch 2, 3 und 8, **dadurch gekennzeichnet, dass** sowohl das Karbonat oder Hydroxid von der Entschwefelung und das Hydroxid von der Fällung aus Natrium, Kalium oder Ammonium sind, dessen Sulfatloesungen beide in den Sulfatrecyclingkreislauf geleitet werden.

10. Verfahren nach Anspruch 1, **dadurch gekennzeichnet, dass** das gefilterte und gewaschene Präzipitat vor dem Trocknen einer Wiederauflösung des Bleihydrat oder -monoxid mit nachfolgender Wiederfällung desselben unterzogen wird, gefolgt von wenigstens einem Waschzyklus und nachfolgender Trennung der Waschflüssigkeit.

## Revendications

1. Procédé pour la production d'hydroxyde de plomb ou de monoxyde de haute pureté, de matériaux ou résidus contenant du plomb sous forme de sulfates, monoxyde et/ou autres composés, tels que la pâte provenant des batteries d'accumulateurs au plomb usées, **caractérisés en ce qu'**il inclut les étapes suivants:
• désulfuration du matériel et/ou des résidus contenant du sulfate de plomb dans une suspension aqueuse avec un carbonate convenable ou hydrate afin d'obtenir la conversion de sulfate de plomb en carbonate ou hydrate;
• calcination de ce matériel désulfuré et/ou résidus pour obtenir un monoxyde impure de plomb, suivie par un refroidissement et broyage;
• lessivage du monoxyde impure de plomb en solution aqueuse d'acide acétique suivie par une filtration pour séparer un résidu solide, composé principalement de sulfate de plomb non converti, de la solution d'acétate de plomb;
• précipitation de l'acétate de plomb en solution au moyen d'un hydroxyde alcalin ou alcalino-terreux, en mesure d'obtenir des acétates solubles, utilisé en quantité telle que la valeur de pH atteint environ 13, afin d'obtenir un précipité sous forme d'hydrate de plomb ou de monoxyde de plomb, où la précipitation se déroule à des températures inférieures à 50 ° C, en mesure d'obtenir un précipité sous forme d'hydrate, ou à la température d'ébullition, en mesure d'obtenir un précipité sous forme de monoxyde, suivie par filtration du précipité, séparation d'une solution, au moins un cycle de lavage and suivante séparation du liquide du lavage;
• séchage et optionnelle calcination des matières solides filtrées et lavées pour obtenir un très pur hydrate de plomb ou monoxyde de plomb en fonction de la température de séchage.

2. Procédé selon la revendication 1, où l'étape de désulfuration du matériau contenant du sulfate de plomb est effectué dans une solution aqueuse avec un carbonate ou hydrates sélectionnés parmi ceux de sodium, de potassium ou d'ammonium, suivie par une filtration pour séparer une solution du sulfate de sodium, de potassium ou d'ammonium et au moins par un cycle de lavage du matériel et/ou de résidus désulfuré et filtré et la suivante séparation du liquide de lavage.

3. Procédé selon la revendication 1, où l'hydroxyde utilisé pour la précipitation est sélectionnée parmi l'hydroxyde de sodium, l'hydroxyde de potassium et l'hydroxyde d'ammonium.

4. Procédé selon la revendication 1, où le séchage est conduit à températures au dessous de 100 °C pour obtenir un hydrate de plomb très pur ou à températures entre 130 °C et 150 °C pour obtenir un monoxyde très pur de plomb ou à températures plus hautes de 150 °C jusque à 650 °C pour obtenir un oxyde de plomb très pur cristallisé sous forme alpha ou bêta.

5. Procédé selon la revendication 1 où la solution, après la filtration de la phase solide, est insufflée par anhydride carbonique pour faire précipiter le plomb restant encore en solution sous forme de carbonate, suivi d'une filtration du précipité pour séparer les traces de plomb et obtenir une solution limpide de acétate de sodium, ou de potassium, ou de ammonium, ou de calcium si on utilise le calcaire pour précipiter le plomb.

6. Procédé selon la revendication 5, dans lequel la solution filtrée est traitée par un résine échangeur acide cationique fort pour capturer les cations des agents précipitants, sodium, potassium ou ammonium et régénérer l'acide acétique qui est recyclé.

7. Procédé selon la revendication 1, où la solution séparée pendant la filtration du précipité est acidifiée par acide sulfurique pour obtenir une précipitation de sulfate de plomb et l'acide acétique en solution récupéré par une extraction avec solvant et/ou par distillation et à la fin recyclé à l'étape de lessivage.

8. Procédé selon la revendication 6 où les résines sont régénérées avec de l'acide sulfurique afin d'obtenir une solution de sodium, de potassium ou d'ammonium, qui est envoyé au cycle de recyclage des sulfates.

9. Procédé selon la revendication 2, 3 e 8, où soit le carbonates, soit les hydrates utilisés pour la désulfuration et les hydrates utilisés dans la précipitation, sont de sodium, de potassium ou d'ammonium, desquels les solutions de sulfates produites sont envoyées au cycle de recyclage des sulfates.

10. Procédé selon la revendication 1, où avant l'opération de séchage le précipité, filtré et lavé, est soumis à résolubilition de hydrate ou monoxyde de plomb avec suivante réprécipitation, suivie par au moins un cycle de lavage and suivante séparation du liquide du lavage.
